Europäisches Patentamt

European Patent Office

Office européen des brevets

(11) Numéro de publication: **0 305 237**
**A1**

## DEMANDE DE BREVET EUROPEEN

(21) Numéro de dépôt: **88401940.7**

(22) Date de dépôt: **26.07.88**

(51) Int. Cl.⁴: **G 01 B 5/255**

(30) Priorité: **10.08.87 FR 8711353**

(43) Date de publication de la demande:
**01.03.89 Bulletin 89/09**

(84) Etats contractants désignés: **DE ES GB IT**

(71) Demandeur: **Etablissements M. Muller & Cie**
**2, Avenue de la Trentaine Zone Industrielle**
**F-77500 Chelles (FR)**

(72) Inventeur: **Brodu, Jacques**
**27, rue de Rémusat**
**F-75016 Paris (FR)**

(74) Mandataire: **Tony-Durand, Serge**
**Cabinet Tony-Durand 77, rue Boissière**
**F-75116 Paris (FR)**

(54) **Dispositif à plateau pivotant pour la mesure des angles de braquage d'une roue directrice d'une voiture automobile.**

(57) L'axe de pivotement du plateau mobile (1) de ce dispositif est relié à un capteur angulaire (11) porté par un bras mobile (16) ou similaire subissant les déplacements en translation du plateau mobile. Ce bras mobile (16), ou une autre pièce associée au plateau mobile (1) et accompagnant celui-ci dans ses déplacements en translation, est équipé d'un organe de détection (20) disposé en regard d'une plage fixe (21) présentant des caractéristiques physiques - par exemple : conductibilité électrique, pouvoir réfléchissant... - différentes de celles du support (22) de cette plage, dont la surface matérialise en quelque sorte la liberté de déplacement conféré au plateau mobile (1) du fait de son mode de montage. Or cet organe de détection (20) est branché dans un circuit électrique (24) commandant un organe de signalisation (25) ou un système d'arrêt de l'appareil de mesure associé au capteur angulaire (11) du dispositif.

Ce dispositif est destiné à être utilisé pour la mesure des angles de braquage d'une roue directrice d'une voiture automobile.

FIG. 2

EP 0 305 237 A1

## Description

### Dispositif à plateau pivotant pour la mesure des angles de braquage d'une roue directrice d'une voiture automobile

La présente invention concerne les dispositifs à plateau pivotant utilisés pour la mesure des angles de braquage d'une roue directrice d'une voiture automobile.

Ces dispositifs comportent un plateau horizontal destiné à recevoir une telle roue directrice et qui est monté mobile sur un support fixe avec possibilité de pivotement libre et de déplacements limités dans son propre plan, l'axe de pivotement de ce plateau étant relié à un capteur angulaire assurant la mesure de l'angle de braquage. Ce capteur est porté par un bras associé au plateau mobile et accompagnant celui-ci dans ses mouvements de translation sans subir ses mouvements de pivotement. Pour déterminer les angles de braquage des deux roues directrices d'une voiture automobile, on place donc ces roues sur les plateaux mobiles de deux dispositifs de ce type, puis on effectue les mesures voulues en braquant les roues successivement dans un sens et dans l'autre. A ce sujet il convient de noter que la possibilité de déplacements limités de chaque plateau mobile dans son propre plan est nécessaire, compte tenu que l'axe vertical de pivotement de chaque roue ne se trouve généralement pas à l'aplomb de l'axe de pivotement du plateau mobile correspondant.

Dans les dispositifs actuels de ce genre, le plateau mobile repose sur la surface supérieure du support fixe par l'intermédiaire de billes de roulement et son axe vertical de pivotement est engagé à travers une ouverture de ce support. L'importance de la section de cette ouverture détermine donc l'ampleur des déplacements possibles du plateau mobile en translation dans son propre plan.

Toutefois il est possible que lors du braquage d'une roue, le plateau correspondant se déplace d'une façon telle que son axe de pivotement vienne en butée contre le bord de l'ouverture du support correspondant. Ceci perturbe complètement les mesures effectuées. Du reste les résultats obtenus sont alors aberrants. Or jusqu'ici dans les dispositifs actuels de ce genre il n'existe aucune possibilité pour l'opérateur de se rendre compte de ce fait si ce n'est en constatant le caractère aberrant des mesures affichées par l'appareil correspondant.

Ce défaut se retrouve également dans le dispositif suivant le document FR 2.466.745 qui décrit un plateau pivotant mécanique du type rappelé précédemment ayant comme particularité de comporter un système de rattrapage de jeux. En effet ce dispositif ne comprend aucun moyen évitant d'effectuer une mesure erronée dans le cas où la plaque supérieure arrive en butée mécanique sur la plaque inférieure.

Quant au document GB 2.106.254, il décrit un appareillage de mesure de ripage, c'est-à-dire un dispositif permettant la mesure du déplacement latéral d'un plateau supérieur par rapport à un plateau inférieur, solidaire du sol, ce déplacement latéral étant provoqué par le passage de la roue du véhicule à contrôler ayant un pincement ou ouverture. Un tel dispositif est largement connu. Mais là encore ce dispositif ne permet pas d'éviter une erreur de mesure si la plaque supérieure se trouve en butée.

C'est pourquoi la présente invention a pour but de perfectionner les dispositifs à plateau pivotant du type rappelé précédemment en les équipant d'un système permettant d'éviter de faire des erreurs de mesures des angles de braquage.

A cet effet l'invention a pour objet un dispositif tel que rappelé précédemment qui est caractérisé en ce que le bras mobile portant le capteur angulaire, ou une autre pièce associée au plateau mobile et accompagnant celui-ci dans ses déplacements en translation, est équipé d'un organe de détection disposé en regard d'une plage fixe présentant des caractéristiques physiques - par exemple :conductibilité électrique, pouvoir réfléchissant... - différentes de celles du support de cette plage, dont la surface matérialise en quelque sorte la liberté de déplacement conféré au plateau mobile du fait de son mode de montage, l'organe de détection étant branché dans un circuit électrique commandant un organe de signalisation ou un système d'arrêt de l'appareil de mesure associé au capteur angulaire du dispositif.

Ainsi lorsque l'axe de pivotement du plateau mobile vient en butée contre le support fixe, l'opérateur est immédiatement averti, ou bien l'appareil de mesure est automatiquement mis hors fonctionnement. Ceci permet d'éviter l'inconvénient exposé précédemment, en l'occurrence l'obtention de résultats de mesures complètement aberrants. Il suffit alors à l'opérateur de recommencer l'opération en plaçant les roues de façon différente sur les plateaux mobiles des deux dispositifs utilisés.

Dans une forme de réalisation avantageuse du présent dispositif, le bras portant le capteur angulaire est équipé d'un système de mesure déterminant l'ampleur du déplacement transversal de ce bras lors du mouvement de translation du plateau mobile, ce système de mesure permettant ainsi de calculer la distance existant entre le point de rotation de la roue et le plan médian de celle-ci, c'est-à-dire la valeur du déport au sol de la roue. En effet la position du plan médian de la roue sur le plateau mobile peut être aisément déterminée.

Cependant d'autres particularités et avantages du dispositif selon l'invention apparaîtront au cours de la description suivante. Celle-ci est donnée en référence au dessin annexé à simple titre indicatif.

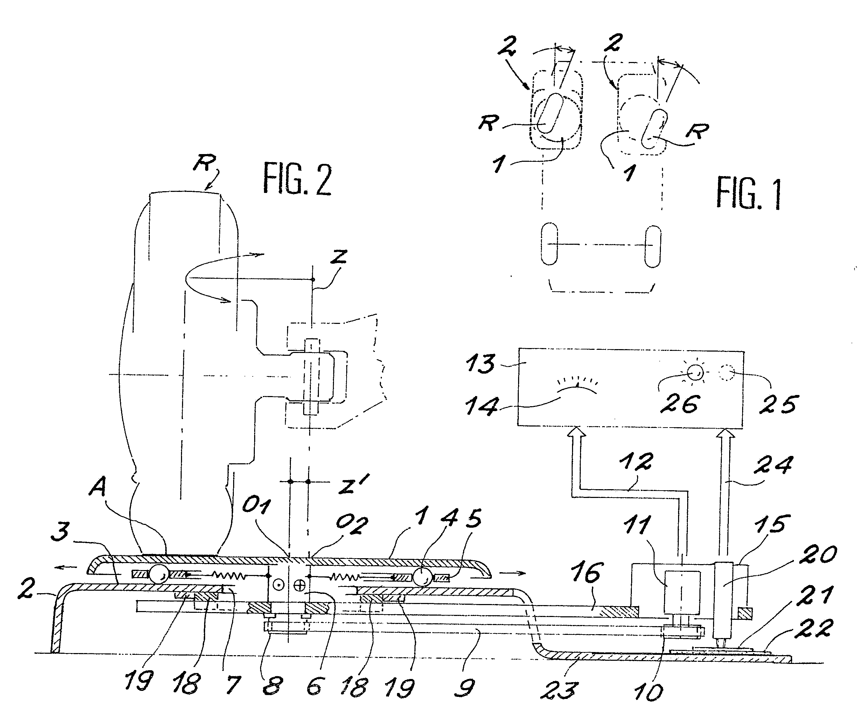

Sur ce dessin la figure 1 est un schéma illustrant l'utilisation de deux dispositifs à plateau pivotant pour la mesure des angles de braquage d'une roue directrice d'une voiture automobile.

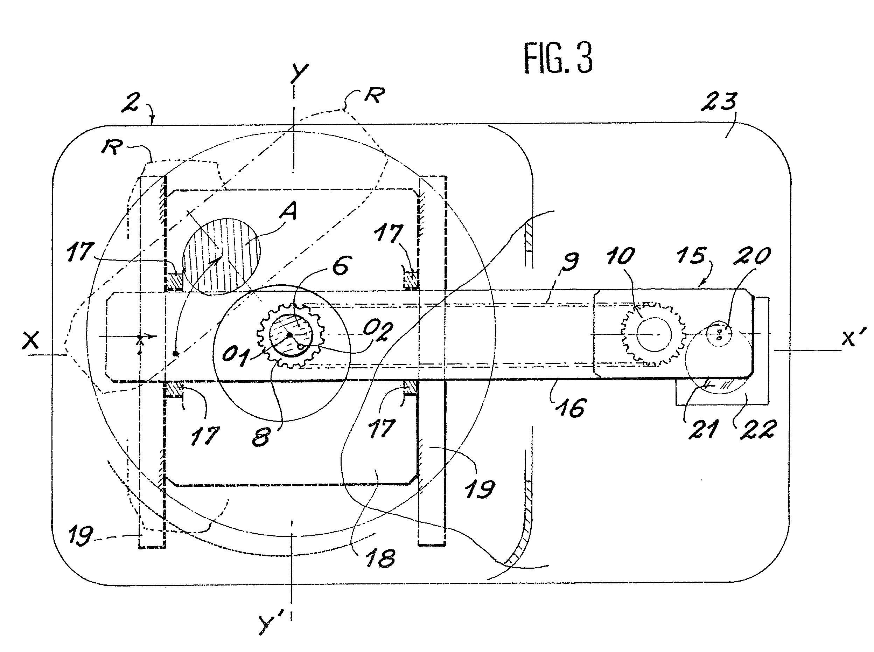

La figure 2 est une vue schématique verticale du dispositif selon l'invention.

La figure 3 est une vue en coupe horizontale de ce dispositif.

La figure 4 est une vue partielle en plan d'une variante de réalisation.

Le présent dispositif comporte un plateau horizontal 1 destiné à recevoir une roue directrice R d'une voiture automobile. Ce plateau est monté mobile sur un support fixe 2 posé au sol et qui comporte une surface supérieure horizontale 3 servant de support proprement dit au plateau 1. Celui-ci repose sur cette surface par l'intermédiaire d'une série de billes 4 montées dans une plaque 5 leur servant de cage. La surface inférieure du plateau mobile 1 porte un axe vertical 6 qui est engagé, à travers une ouverture 7 de la surface supérieure du support 2. La section de cette ouverture détermine donc l'ampleur des déplacements possible du plateau mobile 1 dans son propre plan, celui-ci pouvant par ailleurs tourner librement par rotation de son axe 6.

L'extrémité libre de cet axe porte un pignon 8 sur lequel est engagée une courroie crantée 9 assurant son accouplement avec un pignon similaire 10 porté par l'axe d'un capteur angulaire 11. Ce capteur, qui peut consister en un potentiomètre, est relié par un circuit 12 à un appareil de mesure dont le tableau d'affichage 13 comporte un système indicateur 14 affichant la valeur de l'angle de rotation du plateau mobile 1 lors du braquage de la roue correspondante R.

Ce capteur est fixé dans un boîtier 15 porté par l'extrémité libre d'un bras horizontal 16 dont l'extrémité opposée comporte un palier à l'intérieur duquel tourillonne l'axe 6 de pivotement du plateau mobile 1. L'extrémité correspondante de ce bras est montée coulissante dans le sens transversal X-X' du dispositif. A cet effet ce bras est disposé entre des guides 17 portés par une platine horizontale 18 disposée sous la surface supérieure 3 du support fixe 2. Cette platine est elle-même montée coulissante dans le sens longitudinal Y-Y' du dispositif. A cet effet elle est placée entre deux réglettes fixes de guidage 19 prévues sur la paroi inférieure de la surface supérieure 3 du support fixe 2. Ainsi toute translation horizontale du plateau mobile 1 est retransmise intégralement au boîtier portant le capteur angulaire 11.

Le montage ainsi prévu permet que lors du braquage des deux roues directrices d'un véhicule, qui sont placées sur deux dispositifs tels que décrits (voir figure 1), le plateau mobile 1 de chacun d'eux puisse à la fois pivoter autour de son axe 6 et se déplacer en translation dans son propre plan. Le point de rotation $O_2$ de chaque roue R correspond à l'intersection de l'axe Z-Z' de son pivot et de la surface du plateau correspondant 1. Ce point de rotation est variable d'un véhicule à l'autre et dépend de la géométrie du véhicule correspondant. De plus, sauf hasard tout à fait improbable, la position de ce point de rotation $O_2$ de la roue ne correspond pas avec le centre $O_1$ de l'axe 6 de pivotement du plateau 1, car la zone d'appui A de la roue sur le plateau mobile est variable. C'est donc la raison pour laquelle le plateau mobile est amené à subir un déplacement en translation lors du braquage de la roue, ce mouvement étant justement rendu possible par le montage particulier décrit précédemment.

Cependant cette liberté de translation est limitée par la venue en butée de l'axe 6 contre le bord interne de l'ouverture 7 prévue dans le support fixe 2. Plus exactement si la plaque 5, servant de cage aux billes 4, comporte une collerette (non représentée), l'axe 6 vient tout d'abord en butée contre cette collerette qui bute alors elle-même contre la paroi interne de l'ouverture 7. La zone de translation libre du plateau mobile 1 est ainsi définie par le secteur circulaire ayant pour centre le centre de l'ouverture 7 et ayant pour rayon R le rayon de cette ouverture, moins le rayon de l'axe 6, et éventuellement moins l'épaisseur de la collerette centrale prévue sur la plaque 5. Or l'intégralité de translation du plateau mobile 1 se trouve transmise à l'extrémité libre du bras mobile 16.

Conformément à la caractéristique essentielle du présent dispositif, cette extrémité est équipée d'un organe de détection 20 disposé en regard d'une plage fixe 21 présentant des caractéristiques physiques particulières, différentes de celles du support de cette plage, en l'occurrence une plaque 22 portée par une extension 23 du support fixe 2.

La surface de cette plage 21 correspond è la surface de la translation libre du plateau mobile 1. En conséquence dès que l'axe de pivotement 6 de ce plateau vient en butée, directement ou indirectement, contre le support mobile 2, le détecteur 20 se trouve déplacé en dehors de la plage 21. Or ce détecteur, qui est apte à détecter immédiatement ce fait, est raccordé par un circuit électrique 24 à l'appareil de mesure associé au présent dispositif. Ce détecteur peut alors commander l'allumage d'un voyant de signalisation 25 indiquant que le dispositif n'est plus apte à fonctionner normalement, un autre voyant 26 étant par contre allumé lorsque le dispositif fonctionne dans des conditions normales. Cependant le circuit 24, dans lequel est branché le détecteur 20, peut également être conçu pour commander automatiquement l'arrêt du système de mesure du présent dispositif. Eventuellement le présent système de sécurité peut à la fois commander l'allumage d'un voyant de signalisation 25 et l'arrêt du système de mesure.

La plage 21 disposée en regard du détecteur 20 peut se différencier de son support 22 par des caractéristiques de conductibilité électrique, cette plage pouvant être par exemple constituée par une zone cuivrée prévue sur une plaque 22 en matière isolante. Dans un tel cas le détecteur 20 correspondant est un détecteur inductif qui transmet une information logique en tout ou rien, suivant qu'il est situé ou non vis à vis de la plage conductrice 21.

Cependant le système de détection utilisé peut également être un système de détection magnétique, ou bien encore un système de détection optique. Dans ce dernier cas la plage 21 peut être matérialisée par une plage réfléchissante, le détecteur 20 comportant alors à la fois un émetteur et un récepteur de lumière disposés en regard de cette plage.

Il serait également possible de réaliser le détecteur 20 sous forme d'un micro-contact électrique comportant un poussoir de commande placé contre une zone en creux matérialisant la plage 21. Ainsi lorsque ce micro-contact viendrait à quitter cette plage, il serait automatiquement actionné par sa venue en contact contre le support 22 de plus forte épaisseur. Mais de nombreuses autres solutions pourraient également être prévues pour la réalisation de ce système de détection de position.

Dans une forme de réalisation avantageuse du présent dispositif, l'extrémité libre du bras 16 est équipée d'un système de mesure déterminant l'ampleur du déplacement transversal de ce bras lors du mouvement de translation du plateau mobile. Ce système de mesure permet ainsi de calculer la distance existant entre le point de rotation de la roue et le plan médian de celle-ci, c'est-à-dire la valeur du déport au sol de la roue. En effet la position du plan médian de la roue sur le plateau mobile peut être aisément déterminée.

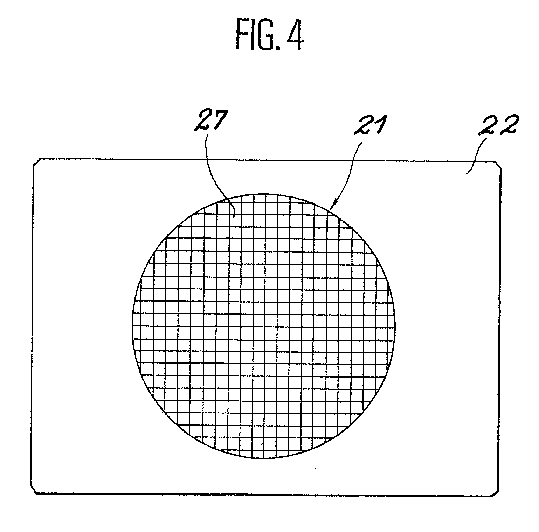

Le système de mesure ainsi prévu peut consister en un capteur optique (infra-rouge par exemple) rapporté sur le bras mobile 16 et disposé en regard d'un quadrillage 27 prévu sur la plage 21 (voir figure 4).

Ce système de mesure peut également consister en deux roulettes montées sur le bras mobile 16 et disposées à 90° l'une de l'autre au contact du support fixe 2 ou d'une plaque solidaire de celui-ci, ces roulettes étant accouplées à des capteurs rotatifs permettant de déterminer l'ampleur du déplacement transversal du bras mobile 16.

Cependant tout autre système approprié de mesure pourrait être utilisé pour déterminer l'ampleur de ce déplacement. Du reste, le dispositif selon l'invention n'est pas limité à l'exemple de réalisation décrit, qui peut faire l'objet de diverses variantes. Ainsi au lieu d'être rapporté sur le bras mobile 16 portant le capteur angulaire 11, le détecteur 20 du système de contrôle de position pourrait être monté sur toute autre pièce mobile associée au plateau pivotant 1 et accompagnant celui-ci dans ses mouvements de translation sans subir ses mouvements de pivotement.

**Revendications**

1°- Dispositif de plateau pivotant destiné è recevoir une roue directrice de voiture automobile pour la mesure des angles de braquage de cette roue, comportant un plateau horizontal monté mobile sur un support fixe avec possibilité de pivotement libre et de déplacements limités dans son propre plan, l'axe de pivotement de ce plateau étant relié à un capteur angulaire porté par un bras mobile ou similaire subissant les déplacements en translation du plateau mobile, caractérisé en ce que ce bras mobile (16), ou une autre pièce associée au plateau mobile (1) et accompagnant celui-ci dans ses déplacements en translation, est équipé d'un organe de détection (20) disposé en regard d'une plage fixe (21) présentant des caractéristiques physiques - par exemple : conductibilité électrique, pouvoir réfléchissant... - différentes de celles du support (22) de cette plage, dont la surface matérialise en quelque sorte la liberté de déplacement conféré au plateau mobile (1) du fait de son mode de montage, l'organe de détection (20) étant branché dans un circuit électrique (24) commandant un organe de signalisation (25) ou un système d'arrêt de l'appareil de mesure associé au capteur angulaire (11) du dispositif.

2°- Dispositif selon la revendication 1, caractérisé en ce que le bras (16) portant le capteur angulaire (11) est équipé d'un système de mesure déterminant l'ampleur du déplacement transversal de ce bras lors du mouvement de translation du plateau mobile (1), ce système de mesure permettant ainsi de calculer la distance existant entre le point de rotation de la roue et le plan médian de celle-ci, c'est-à-dire la valeur du déport au sol de la roue, compte tenu que la position du plan médian de la roue sur le plateau mobile peut être aisément déterminée.

3°- Dispositif selon la revendication 2, caractérisé en ce que le système de mesure, déterminant l'ampleur du déplacement transversal du bras mobile (16) lors du mouvement de translation du plateau mobile, est constitué par un détecteur optique disposé en regard de repères prévus sur le support fixe (2) ou sur une plaque solidaire de celui-ci.

4°- Dispositif selon la revendication 2, caractérisé en ce que le système de mesure, déterminant l'ampleur du déplacement transversal du bras mobile (16) lors du mouvement de translation du plateau mobile, est constitué par des roulettes, disposées à 90° l'une de l'autre, et reliées à des capteurs rotatifs, ces roulettes étant disposées au contact du support fixe (2) ou d'une plaque solidaire de celui-ci.

FIG.1

FIG.2

FIG.3

FIG. 4

Office européen
des brevets

**RAPPORT DE RECHERCHE EUROPEENNE**

Numero de la demande

EP  88 40 1940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | GB-A-2 106 254  (MILLS) <br> * Figures 1-5; page 2, ligne 28 - page 3, ligne 18 * <br> --- | 1,2 | G 01 B    5/255 |
| D,Y | FR-A-2 466 745  (A. ROHE GmbH) <br> * Figures; page 3, ligne 17 - page 5 * <br> --- | 1,2 | |
| A | FR-A-2 129 062  (FACOM) <br> * Figures 1,2; page 3, ligne 20 - page 4, ligne 36 * <br> --- | 1-3 | |
| A | GB-A-2 077 926  (BEISSBARTH) <br> * Figures 1,3,4; page 2, lignes 82-106 * <br> --- | 1 | |
| A | US-A-4 574 490  (CURCHOD) <br> * Figures 3,4,9; colonne 3, ligne 15 - colonne 4, ligne 52 * <br> --- | 1 | |
| A | US-A-2 125 534  (WOCHNER) <br> * Figures; colonne 2, ligne 12 - colonne 4, ligne 13 * <br> ----- | 1 | |

DOMAINES TECHNIQUES
RECHERCHES (Int. Cl.4)

G 01 B    5/255
G 01 B    7/315
G 01 B   11/275
G 01 B   21/26

Le présent rapport a été établi pour toutes les revendications

| Lieu de la recherche | Date d'achèvement de la recherche | Examinateur |
|---|---|---|
| LA HAYE | 17-11-1988 | BATTESON A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)